# EUROPÄISCHE PATENTSCHRIFT

(11) **EP 0 936 514 B1**
(45) Veröffentlichungstag und Bekanntmachung des Hinweises auf die Patenterteilung: **24.03.2004**
(21) Anmeldenummer: 99100321.1
(22) Anmeldetag: 12.01.1999
(51) Int. Cl.: G05B 13/02

(54) **Verfahren und Vorrichtung zum Regeln eines Antriebsystems einer Maschine und/oder einer Anlage**
Method and device for controlling the drive system of a machine and/or an installation
Procédé et dispositif pour la commande d' un système d' entrainement d' une machine ou d' une installation

(30) Priorität: 14.01.1998 DE 19801136
(43) Veröffentlichungstag der Anmeldung: 18.08.1999
(73) Patentinhaber: Heidolph-Elektro GmbH & Co. KG, D-93309 Kelheim (DE)
(72) Erfinder: Lukosz, Harald, Dipl.-Ing. (FH), 93309 Kelheim (DE)
(74) Vertreter: Pfeifer, Hans-Peter, Dr.

(56) Entgegenhaltungen:
- EP-A- 0 444 801
- EP-A- 0 659 996
- EP-A- 0 710 901
- US-A- 5 268 834
- US-A- 5 408 406
- US-A- 5 471 381

## Beschreibung

Die Erfindung bezieht sich auf ein Verfahren zum Regeln eines Antriebsystems einer Maschine und/oder einer Anlage gemäß dem Oberbegriff des Patentanspruches 1 sowie auf eine Vorrichtung zur Durchführung eines solchen Verfahrens.

Aus der DE 38 15 530 C2 ist ein der Überwachung dienliches Regelverfahren zur Ermittlung der Drehzahl einer mit einem Antriebsystem verbundenen Maschine, wie bspw. des Antriebmotors einer Druckmaschine, bekannt, bei welchem die Drehzahl mittels eines Drehzahlsensors erfasst und mit einem für das Antriebsystem vorgegebenen Sollwert verglichen wird. Der Sollwert wird dabei einem mathematischen Modell einer durch das Antriebsystem und die Maschine gebildeten Regelstrecke zugeführt, die an ihrem Ausgang einen errechneten Istwert bereitstellt, welcher für Steuerungsund Regelzwecke mit dem gemessenen Istwert verglichen wird. Der Drehzahlsensor ist bevorzugt mit einem Inkrementalgeber ausgebildet, der zur Erzeugung von zählbaren Tachosignalen genutzt wird, die einem Steuergerät der Maschine zugeführt werden.

Aus der DE 43 33 286 A1 ist ein zur Diagnose von Störungen in Maschinen, wie bspw. einer Stanzpresse, konzipiertes Verfahren bekannt, bei welchem ein Computersystem eingesetzt wird, das ein Expertensystem und eine davon getrennte, dem Speichern von Wissensdaten dienliche Datenbank enthält. Das Expertensystem wird dabei für den Zweck einer Identifizierung von Störungen zum Verarbeiten von Regelinformationen genutzt, die für die Durchführung von Betriebsabläufen der Maschine benötigt und mit den Wissensdaten der Datenbank in Abhängigkeit von Anfangsbefehlen zur Verfügung gestellt werden, die sich aus der Information eines Reglers bzw. Controllers der Maschine ergeben.

Aus der DE 44 33 593 A1 ist ein Verfahren zum Regeln einer Maschine, wie bspw. eines bei der Herstellung von Lebensmitteln eingesetzten Extruders, bekannt, bei welchem die Daten von Sollwertvorgaben auf der Basis von Versuchsdaten und/oder Expertenwissen erstellt und Stellgrößen der Regelung abhängig sind von subjektiven Entscheidungen unterliegenden Beurteilungsmaßstäben einer sensorisch bspw. mittels eines Viskositätssensors oder auch analytisch überwachten Produktqualität. Mittels der Sollwertvorgaben wird ein Arbeitspunkt jeder Maschine optimiert und stabilisiert, und weiterhin wird damit ein in die Maschinensteuerung integrierter Regler erstellt. Für eine Vielzahl von produktspezifisch differenzierten Regelstrecken, die bei diesem Regelverfahren wegen der sich reichlich unterscheidenden Stellgrößen zwingend benötigt werden, sind dabei als Regler bevorzugt prozeßregelnde Fuzzy-Regler vorgesehen, die einzeln an die produktspezifischen Stellgrößen dieser Regelstrecken angepasst sind.

Aus der DE 195 27 323 A1 ist eine Schaltungsanordnung zum Steuern einer der Erkennung einer Fahrsituation dienlichen Einrichtung in einem Kraftfahrzeug bekannt, bei welcher ein der Auswertung von Sensorsignalen und der Erzeugung von Stellsignalen dienliches Fuzzy-System mit einem neuronalen Netz verbunden ist. In dem neuronalen Netz werden die Sensorsignale mit Referenzdaten für den Fahrbetrieb des Fahrzeuges verglichen, um für eine Optimierung des Fuzzy-Systems Steuersignale bereitzustellen, die eine von der momentanen Fahrsituation abhängige Steuerung des Fahrbetriebes des Fahrzeuges erlauben.

Für das Regeln eines Antriebsystems einer Maschine und/oder einer Anlage können konzeptionell minimale und maximale Randbedingungen für die Auslegung eines betreffenden Regelkreises ohne weiteres mit Modellversuchen eines Meßantriebes berücksichtigt werden, jedoch ist es schwierig, ein im eigentlichen Arbeitsbetrieb vorkommendes Störverhalten für eine eventuell als erforderlich angesehene Korrektur der Regelung insbesondere dann zu ermitteln, wenn die Art der Störung unbekannt ist. Gesucht sind daher zeitund energieoptimale Regelungen für eine erwünscht rasche Ausregelung solcher Störungen. Dafür haben sich bis jetzt hauptsächlich Mehrgrößen-Regelungen angeboten, die ein gleichzeitiges Vorhandensein von mehreren Regelgrößen ergeben. Es können damit entsprechend parameterbedingt korrigierte Stellsignale an ein Stellglied der Maschine geliefert werden, welches in einen mit einer Datenerfassung un einem Berechnungssystem ausgebildeten geschlossenen Regelkreis integriert ist. Die bis jetzt bekannten Lösungsansätze für eine rasche Ausregelung von Störungen bei einem Regelverfahren der eingangs genannten Art sind jedoch noch nicht voll befriedigend, insbesondere nicht hinsichtlich der Anwendbarkeit auf ein Regelverfahren, das sich für Maschinen eignen könnte, deren Antriebsysteme auch außerhalb der von ihrem Anwender vorgegebenen Randbedingungen wenigstens vorübergehend liegen können und dann nicht mehr zwingend dem für sie konzipierten Regelverfahren entsprechen.

Der Erfindung liegt die Aufgabe zugrunde, ein Verfahren zum Regeln eines Antriebsystems einer Maschine und/oder einer Anlage bereitzustellen, welches eine zeitlich rasch ablaufende automatische Anpassung an veränderte Betriebsbedingungen ergibt, die ihre Ursache in einem Störverhalten des Antriebsystems haben.

Diese Aufgabe wird erfindungsgemäß mit den kennzeichnenden Maßnahmen des Patentanspruches 1 gelöst, die eine zweckmäßige Ausbildung mit den Merkmalen erfahren, die durch die weiteren Ansprüche angegeben sind.

Das erfindungsgemäße Verfahren ergibt als Folge der damit angestrebten adaptiven Parametersteuerung des Regelkreises eine äußerst stabile Regelung auch ohne das Erfordernis eines ständigen Soll-Ist-Vergleichs auch für solche Anwendungsfälle, wo ein mögliches Störverhalten des Antriebsystems nicht vorgeplant ist. So können bspw. unregelmäßige bzw. häufiger wechselnde und/oder überhöhte Laststöße und Drehmomentstöße bei Kleinantrieben in aller Regel ausgeschlossen werden, sodaß bei solchen Kleinantrieben bisher auch geeignete Vorkehrungen fehlten, um ein dadurch bedingtes Störverhalten regelungstechnisch zu beherrschen. Durch die vorgesehene adaptive Parametersteuerung des Regelkreises wird also eine selbstlernende Optimierung der Regelbasis ausschließlich über die eigenen Parameter des Regelkreises erhalten, ohne daß dafür Impulse von außen benötigt werden, weil durch das für die Parametersteuerung benutzte neuronale Netz eine Generierung von eigenen Regelparametern sichergestellt werden kann. Durch das Gesamtkonzept des erfindungsgemäßen Regelverfahrens wird daher eine sich automatisch verändernde Regelstruktur bei jeder Anpassung an einen sich verändernden Regelparameter erhalten, sobald diese Veränderung auf der Basis von abnormalen bzw. nicht eindeutig feststellbaren Meßdaten vorgenommen wird. Es kann damit aber auch ein Regelverfahren konzipiert werden, das sich für eine größere Palette von Antriebsystemen von Maschinen eignet, bei denen die Randbedingungen für einen Regelkreis weiter auseinanderliegen, ohne daß es erforderlich ist, dafür individuelle Vorgaben für unterschiedliche Betriebsparameter berücksichtigen zu müssen.

Ein Ausführungsbeispiel des erfindungsgemäßen Verfahrens und der erfindungsgemäßen Vorrichtung zur Ausübung dieses Verfahrens wird nachfolgend in der Anwendung bei einem aus einem Motor und einem Getriebe gebildeten Antriebsystem näher erläutert. Es zeigt,
- Fig. 1: eine Seitenansicht eines Elektromotors mit angeflanschtem Getriebe und
- Fig. 2: ein Blockschaltbild zur schematischen Darstellung des Ausführungsbeispieles.

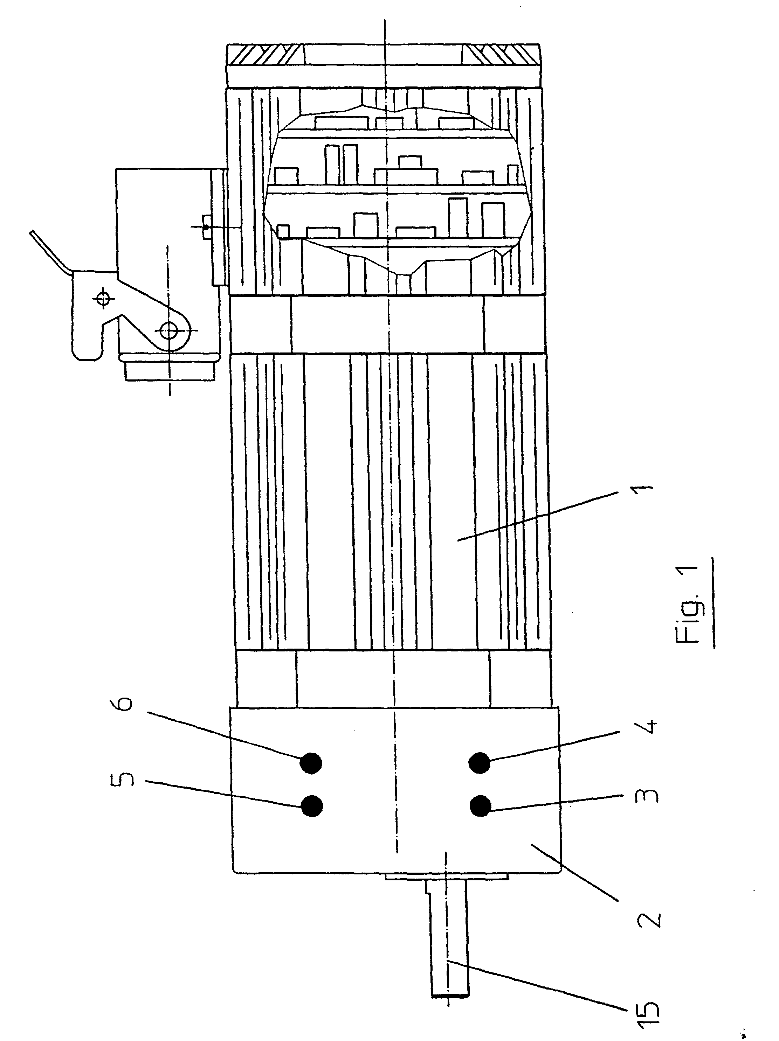

Gemäß der Darstellung in Fig. 1 ist für ein Ausführungsbeispiel der Erfindung ein elektronisch kommutierter Elektromotor 1 mit einem direkt angeflanschten Getriebe 2 berücksichtigt. Ein solches, in seiner Gesamtheit als Getriebemotor bezeichnetes Antriebsystem ergibt eine Optimierung des Wirkungsgrades und der Verschleißfreiheit und läßt eine hohe Drehmomentstabilität bei unterschiedlichen Drehzahlen erreichen.

Auf der Getriebeseite des Elektromotors 1 befinden sich Sensoren mit Meßwertumformern, welche bestimmten Betriebsparametern oder Betriebszuständen des Antriebsystems zugeordnete Meßdaten als Istwerte abnehmen. Bei dem vorliegenden Getriebemotor sind ein Drehzahlsensor 3, ein Vibrationen messender Beschleunigungssensor 4, ein Temperatursensor 5 und Verspannungen im Gehäuse messende Dehnmeßstreifen 6 vorhanden.

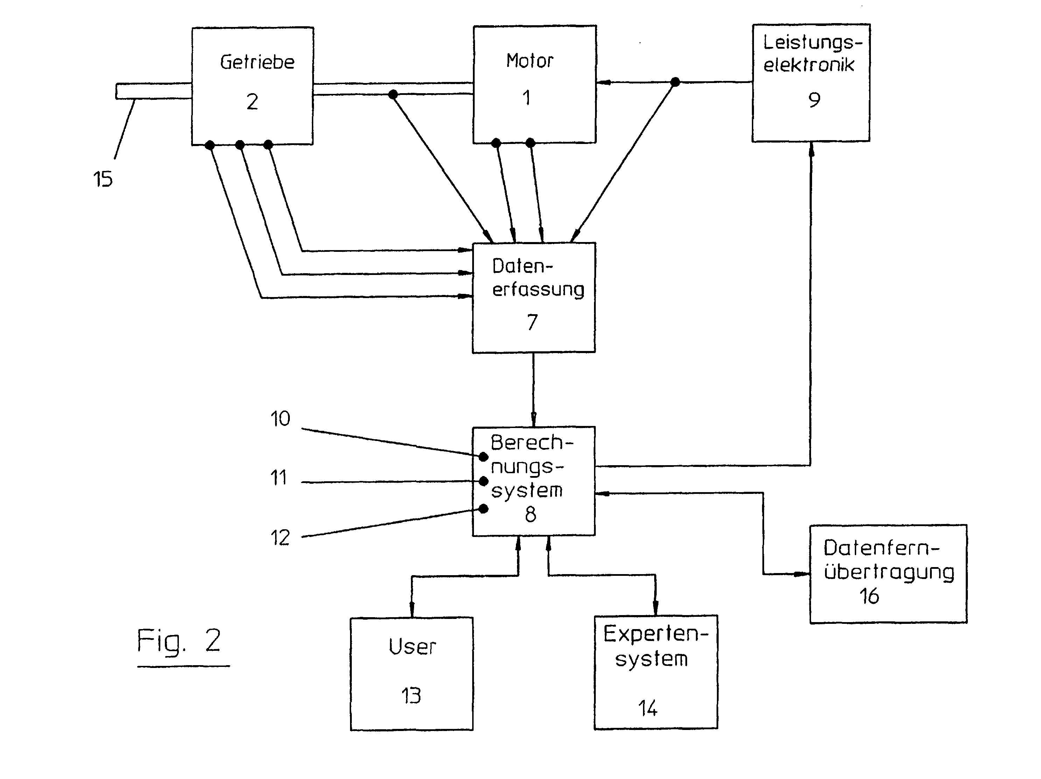

Gemäß der Darstellung durch das Blockschaubild der Fig 2 werden die von den einzelnen Sensoren abgenommenen Istwert-Meßdaten für den Motor 1 und das Getriebe 2 einer Datenerfassung 7 zugeführt, in welcher sie in digitale Parameter umgewandelt werden , die somit bestimmten Betriebszuständen entsprechen. Die Datenerfassung ist mit einem Berechnungssystem 8 verbunden, welches durch Algorithmen bereitgestellte Sollwerte der Meßdaten enthält und somit parameterbedingte korrigierte Stellsignale an ein Stellglied liefern kann, das mit einer Leistungselektronik 9 für den Motor 1 ausgebildet ist und somit in einem mit der Datenerfassung 7 und dem Berechnungssystem 8 ausgebildeten geschlossenen Regelkreis integriert ist.

Das Berechnungssystem 8 enthält als eine erste Regelbasis des Regelkreises einen klassischen adaptiven Regler 10 und als eine zweite Regelbasis einen Fuzzy-Regler 11, die beide mit einem selbstlernenden System auf der Basis eines neuronalen Netzes 12 verknüpft sind. Mit dem klassischen adaptiven Regler 10 werden die für das Antriebsystem maßgeblichen Randbedingungen ausgeregelt. Mit dem Fuzzy-Regler 11 werden andererseits alle als Störgrößen eventuell auftretenden abnormalen bzw. nicht eindeutig feststellbaren Meßdaten erfasst, damit über die Verknüpfung mit dem neuronalen Netz 12 eine adaptive Parametersteuerung des Regelkreises erstellt werden kann. Dafür kann bspw. eine Evolutionsstrategie eingesetzt werden, die es ermöglichen soll, jede bspw. als Folge eines momentan überhöhten Laststoßes oder als Folge eines ebenfalls momentan überhöhten Drehmomentstoßes, abgenommen an der Getriebewelle 15 des Antriebsystems, einmalig oder auch wiederholt erscheinende Störgröße in ein mit dem Berechnungssystem 8 verbundenes Expertensystems 14 zu übernehmen, um mit dieser Übernahme dann gleichzeitig auch eine Optimierung des Berechnungssystems auf der Grundlage eines an die Störgröße angepassten neuen Regelparameters zu erhalten Es ist damit dann gewährleistet, daß auf der Grundlage einer entsprechend veränderten Regelstruktur jedes sich zukünftig analog wiederholende Störverhalten keine erneute Anpassung über den Fuzzy-Regler benötigt.

Mit dem Berechnungssystem 8 ist zweckmäßig auch noch eine User-Information 13 verbunden, die ähnlich dem Expertensystem 14 veränderte Regelparameter an das neuronale Netz 12 des Berechnungssystems 8 eingeben läßt. Auch ist mit dem Berechnungssystem 8 noch eine Datenfernübertragung 16 verbunden, die eine Überwachung und Eingriffsmöglichkeit des gesamten Regelkreises ergibt.

## Patentansprüche

1. Verfahren zum Regeln eines Antriebsystems einer Maschine und/oder einer Anlage, bei dem Signale von Sensoren als Istwert-Meßdaten des Antriebsystems abgenommen, einer Datenerfassung zugeführt und in einem Berechnungssystem weiter verarbeitet werden, welches durch Algorithmen bereitgestellte Sollwerte der Meßdaten enthält und parameterbedingte korrigierte Stellsignale an ein Stellglied eines mit der Datenerfassung und dem Berechnungssystem ausgebildeten geschlossenen Regelkreises der Maschine und/oder der Anlage liefert, **dadurch gekennzeichnet, daß** mittels eines in das Berechnungssystem integrierten selbstlernenden Systems auf der Basis eines neuronalen Netzes eine adaptive Parametersteuerung des Regelkreises auf der Basis von abnormalen bzw. nicht eindeutig feststellbaren Meßdaten vorgenommen wird.

2. Verfahren nach Anspruch 1, bei welchem für die adaptive Parametersteuerung Evolutionsstrategien eingesetzt werden.

3. Verfahren nach Anspruch 1 oder 2, bei welchem eine erste Regelbasis des Regelkreises mit einem klassischen Regler ausgebildet ist, mit welchem normale Randbedingungen des Antriebsystems ausgeregelt werden.

4. Verfahren nach einem der Ansprüche 1 bis 3, bei welchem eine zweite Regelbasis des Regelkreises mit einem adaptiven Fuzzy-Regler ausgebildet ist, mit welchem ein abnormales Störverhalten des Antriebsystems erfasst wird.

5. Verfahren nach einem der Ansprüche 1 bis 4, bei welchem das Stellglied des Regelkreises mit einer Leistungselektronik des Antriebsystems ausgebildet ist.

6. Verfahren nach einem der Ansprüche 1 bis 5, bei welchem in den Regelkreis ein mit dem Berechnungssystem verbundenes Expertensystem integriert ist.

7. Verfahren nach einem der Ansprüche 1 bis 6, bei welchem für eine Regenerierung des Regelkreises durch das selbstlernende System adaptiv optimierte Regelparameter in das Expertensystem übernommen werden.

8. Verfahren nach einem der Ansprüche 1 bis 7, bei welchem in den Regelkreis eine mit dem Berechnungssystem verbundene Datenübertragung integriert ist.

9. Verfahren nach einem der Ansprüche 1 bis 8, bei welchem in den Regelkreis eine mit dem Berechungssystem verbundene User-Information integriert ist.

10. Verfahren nach einem der Ansprüche 1 bis 9, bei welchem für eine Anwendung bei einem aus einem Motor und einem Getriebe gebildeten Antriebsystem unregelmäßige bzw. häufig wechselnde und/oder überhöhte Laststöße und Drehmomentstöße als abnormale Meßdaten berücksichtigt werden.

11. Vorrichtung zur Durchführung des Verfahrens nach Anspruch 1 in der Anwendung bei einem aus einem Motor und einem Getriebe gebildeten Antriebsystem, bei welchem als Sensoren kapazitive oder induktive Drehzahlsensoren, Vibrationen messende Beschleunigungssensoren, Temperatursensoren und Verspannungen im Getriebegehäuse messende Dehnmeßstreifen verwendet sind, welche bestimmten Betriebsparametern und/oder Betriebszuständen zugeordnete Istwert-Meßdaten abnehmen, die einer Datenerfassung zugeführt und in einem gespeicherte Sollwerte der Meßdaten enthaltenden Berechnungssystem weiterverarbeitet werden, wobei das Berechungssystem ein integriertes selbstlernendens System auf der Basis eines neuronalen Netzes aufweist, mit welchem eine adaptive Parametersteuerung eines mit der Datenerfassung und dem Berechnungssystem ausgebildeten geschlossenen Regelkreises vorgenommen wird auf der Basis von abnormalen bzw. nicht eindeutig feststellbaren Meßdaten.

12. Vorrichtung nach Anspruch 11, bei welcher als Motor ein durch eine Leistungselektronik gesteuerter elektronisch kommutierter Elektromotor, ein Drehstrommotor oder ein Gleichstrommotor vorgesehen ist.

13. Vorrichtung nach Anspruch 11 oder 12, bei welcher für die Datenerfassung und das Berechnungssystem digitale Signalprozessoren vorgesehen sind.

14. Vorrichtung nach einem der Ansprüche 11 bis 13, bei welcher für das Expertensystem ein Einplatinen-PC vorgesehen ist.

## Claims

1. Method for controlling a drive system of a machine and/or of an installation, for which signals are taken from sensors as actual measured data, lead to a data acquisition system, and processed in a calculation system; this calculation system having target values of the measured data put to disposition by algorithms, and delivering parameter-related corrected actuator signals to a servopositioner of a closed control circuit, formed by the data acquisition and the calculation system, of the machine and/or installation, **characterized in that** an adaptive parameter control of the control circuit is performed on the basis of measuring data which are abnormal or cannot be determined unambiguously, by means of a self-learning system integrated into the calculation system based upon a neuronal network.

2. Method according to claim 1, for which evolution strategies are applied for the adaptive parameter control.

3. Method according to claim 1 or claim 2, for which a first controlling basis of the control circuit is embodied with a classical controller, serving for controlling normal marginal conditions of the drive system.

4. Method according to any one of the claims 1 to 3, for which a second controlling basis of the control circuit is embodied with an adaptive fuzzy controller, which serves for capturing an abnormal disturbance behavior of the drive system.

5. Method according to any one of the claims 1 to 4, for which the actuator of the control circuit is embodied with a power electronic system of the drive system.

6. Method according to any one of the claims 1 to 5, for which an expert system connected to the calculation system is integrated in the control circuit.

7. Method according to any one of the claims 1 to 6, for which adaptively optimized control parameters are taken over into the expert system, for a regeneration of the control circuit by the self-learning system.

8. Method according to any one of the claims 1 to 7, for which a data transmission system connected to the calculation system is integrated in the control circuit.

9. Method according to any one of the claims 1 to 8, for which a user information connected to the calculation system in integrated in the control circuit.

10. Method according to any one of the claims 1 to 9, for which irregular or frequently changing and/or excessive peak loads and peak torques are considered as abnormal measuring data, for an application formed by a motor and a gearing.

11. Device for the realization of the method according to claim 1, in the application of a drive system embodied by a motor and a gearing, for which capacitive or inductive speed sensors, vibration-measuring acceleration sensors, temperature sensors and wire strain gauges measuring torsions in the gearing casing, are used as sensors, which capture actual measured data assigned to certain operation parameters and/or operating conditions; these actual measured data are lead to a data acquisition system, there they are processed in a calculation system containing stored target values of the measured data, for which the calculation system is supplied with an integrated self-learning system on the basis of a neuronal network, used for performing an adaptive parameter control of a closed control circuit embodied with the data acquisition system and with the calculation system, on the basis of measuring data which are abnormal or which cannot be unambiguously determined.

12. Device according to claim 11, for which an electronically commutated electric motor, a three-phase motor or a direct current motor, controlled by the power electronic system, is supplied as motor.

13. Device according to claim 11 or 12, for which digital signal processors are supplied for the data acquisition and the calculation system.

14. Device according to any one of the claims 11 to 13, for which a single board computer is supplied for the expert system.

## Revendications

1. Procédé pour la régulation d'un système d'entraînement d'une machine et/ou d'une installation, où les signaux sont prélevés par des palpeurs en tant que valeurs de mesure effectives du système d'entraînement, transmis à une saisie de données et ensuite soumis à un traitement ultérieur par un système de calcul contenant des valeurs de mesure de consigne et fournissant des signaux de réglage corrigés en fonction des paramètres à un organe de réglage d'un circuit régulateur de la machine et/ou de l'installation fermé et comprenant la saisie de données et le système de calcul, **caractérisé par le fait qu'**au moyen d'un système auto-apprenant intégré dans le système de calcul, il est effectué, sur base d'un réseau neuronal, un réglage paramétrique adaptatif du circuit de régulation sur base de données de mesure qui sont anormales ou ne se laissent pas constater sans équivoque.

2. Procédé selon la revendication 1, où des stratégies d'évolution sont utilisées pour le réglage paramétrique adaptatif.

3. Procédé selon la revendication 1 ou 2, où une première base de réglage du circuit de régulation a reçu la forme d'un régulateur classique permettant de régler les conditions marginales normales du système d'entraînement.

4. Procédé selon l'une des revendications 1 à 3, où une deuxième base de réglage du circuit de régulation est constitué d'un régulateur fuzzy adaptatif permettant de saisir un comportement anormal du système d'entraînement.

5. Procédé selon l'une des revendications 1 à 4, où l'organe de réglage du circuit de régulation est constitué par une électronique de puissance du système d'entraînement.

6. Procédé selon l'une des revendications 1 à 5, où un système expert relié au système de calcul est intégré dans le circuit de régulation.

7. Procédé selon l'une des revendications 1 à 6, où des paramètres de réglage à optimisation adaptative ont été pris en charge par le système auto-apprenant pour une régénération du circuit de régulation.

8. Procédé selon l'une des revendications 1 à 7, où une transmission de données reliée au système de calcul est intégrée dans le circuit de régulation.

9. Procédé selon l'une des revendications 1 à 8, où une information pour l'utilisateur reliée au système de calcul est intégrée dans le circuit de régulation.

10. Procédé selon l'une des revendications 1 à 9, où, pour une application dans un système d'entraînement constitué d'un moteur et d'un engrenage, des à-coups de charge et des à-coups de couple irréguliers ou bien changeant fréquemment et/ou démesurés sont pris en compte comme données de mesure anormales.

11. Dispositif pour la réalisation du procédé selon la revendication 1 dans l'application pour un système d'entraînement constitué d'un moteur et d'un engrenage, où sont utilisés comme palpeurs des palpeurs de vitesse capacitifs ou inductifs, des palpeurs d'accélération mesurant les vibrations, des palpeurs de température et des extensomètres mesurant les déformations dans le carter de l'engrenage, ces palpeurs prélevant des valeurs de mesure effectives attribuées à certains paramètres de service et/ou états de service qui sont soumis à une saisie de données et traités ultérieurement dans un système de calcul contenant des valeurs de consigne des données de mesure, le système de calcul présentant un système auto-apprenant intégré sur base d'un réseau neuronal, au moyen duquel il est procédé à un réglage paramétrique adaptatif d'un circuit de régulation constitué de la saisie de données et du système de calcul sur la base de données de mesure anormales ou ne se laissant pas constater sans équivoque.

12. Dispositif selon la revendication 11, où l'on a prévu comme moteur un moteur électrique à commutation électronique et commandé par une électronique de puissance, un moteur triphasé ou un moteur à courant continu.

13. Dispositif selon la revendication 11 ou 12, où des processeurs de signaux numériques ont été prévus pour la saisie des données et le système de calcul.

14. Dispositif selon l'une des revendications 11 à 13, où un ordinateur PC monoplatine a été prévu en tant que système expert. L'invention se rapporte à un procédé de régulation d'un système d'entraînement pour une machine et/ou une installation conformément au préambule de la revendication 1 ainsi qu'à un dispositif pour la mise en oeuvre d'un tel procédé.
